# EUROPEAN PATENT APPLICATION

(11) **EP 1 109 333 A2**
(43) Date of publication of application: **20.06.2001**
(21) Application number: 00127554.4
(22) Date of filing: 15.12.2000
(51) Int. Cl.: H04B 7/185

(54) **Method for automatically converting operation mode of multimode satellite terminal**

(30) Priority: 16.12.1999 KR 9958143
(71) Applicant: SAMSUNG ELECTRONICS CO. LTD., Suwon-city, Kyounggi-do 441-742 (KR)
(72) Inventor: Lee, Sang-Seok, Songpa-gu, Seoul (KR)
(74) Representative: Grünecker, Kinkeldey, Stockmair & Schwanhäusser Anwaltssozietät

(57) **Abstract**

Disclosed is a method for converting automatically an operation mode of multimode satellite terminal into a satellite communication service mode or a local network communication service mode according to a present location of the terminal. The method includes the steps of searching a satellite when the power of the terminal is turned on, recognizing a present location by a signal received from the satellite, determining whether the recognized present location is located within a service area of the local network communication, and operating in a local network communication mode if the recognized present location is located within the service area of the local network. Accordingly, the method of the present invention can convert automatically an operation mode of the terminal into the local network or the satellite communication mode in the shortest time by recognizing a present service area.

## Description

The present invention generally relates to a multimode satellite terminal, and in particular, to a method for automatically converting an operation mode of a multimode satellite terminal automatically into a satellite service or a local service mode according to a present location of the terminal.

In general, a multimode satellite terminal selectively provides a satellite communication service like an iridium and a local network communication service like a global system for mobile communication (GSM) or a code division multiple access (CDMA).

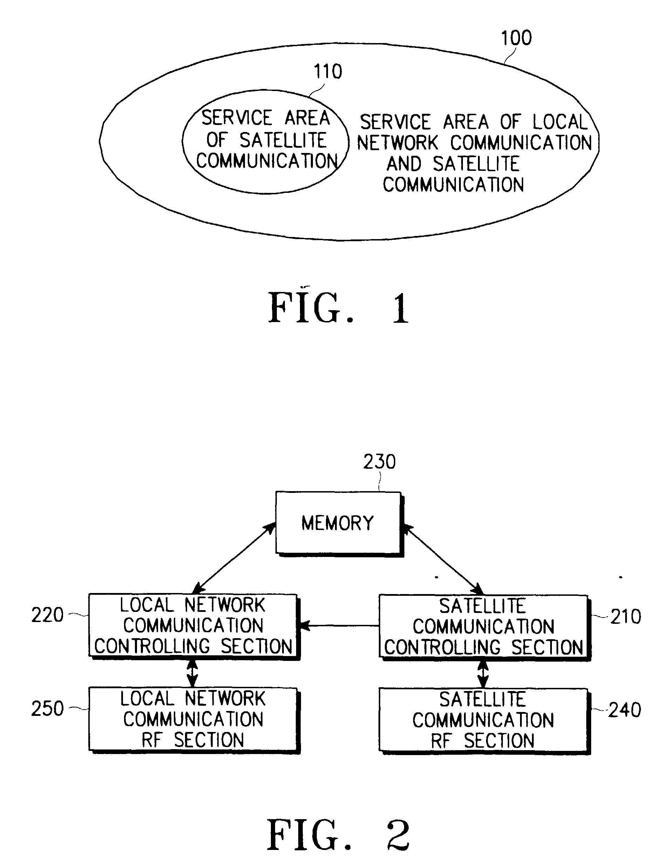

FIG. 1 illustrates a communicable service area of a local network communication and a satellite communication of a multimode satellite terminal according to a related art.

Referring to FIG. 1, a reference numeral 100 represents a communicable service area of the satellite communication, and a reference numeral 110 represents a communicable service area of both the satellite communication and the local network communication.

FIG. 2 is a schematic block diagram illustrating a structure of the multimode satellite terminal according to the related art. The multimode satellite terminal includes a satellite communication control section 210, a local network communication control section 220, a memory 230, a satellite communication radio frequency (RF) section 240 and a local network communication RF section 250.

FIG. 3 is a flow chart illustrating a process for converting an operation mode in the related multimode satellite terminal.

Now, the method for converting an operation mode in the related multimode satellite terminal will be described with referring to FIG. 1 to FIG. 3. When a power of a multimode satellite terminal is turned on at step 310, a local network communication control section 220 determines whether the local network communication is available or not at step 320. If available, the local network communication control section 220 of the multimode satellite terminal operates in a local network service mode through the local network communication RF section 250 at step 330. At step 340, the local network communication control section 220 determines whether the local network service communication is available continuously through the local network communication RF section 250 or not. In the affirmative, the multimode satellite terminal continuously operates in the local network service mode.

Meanwhile, if the local network communication is not available, the satellite communication control section 210 determines whether the satellite communication is available through the satellite communication RF section 240 at step 350 or not. If the satellite communication service is available, the satellite communication control section 210 of the multimode satellite terminal performs a control operation to be operated in the satellite communication mode at step 360. At step 370, the satellite communication control section 210 determines whether a constant time is passed or not after determining that the satellite communication service is only available. If the constant time is not passed after determining that the satellite communication service is available, the satellite communication control section 210 controls to be operated continuously in the satellite communication service mode. On the other hand, if the constant time is passed after determining that the satellite communication service is available, the multimode satellite terminal performs the operations from the step 320 to the step 370.

As stated above, the related multimode satellite terminal operates in the satellite communication service mode when the terminal is in the service area of the satellite communication. In spite of locating the terminal in the communicable service area of the local network, there is a drawback that the user of the terminal has to pay high service fee since the terminal operates in the satellite communication service mode during 30 minutes in the worst case, for example, the satellite communication service is the iridium service.

It is, therefore, the object of the present invention to provide a method for automatically converting an operation mode of a multimode satellite terminal within the shortest time by searching an area serving a local network communication.

According to an aspect of the present invention, there is provided a method for converting an operation mode of a multimode satellite terminal in order to reduce a power consumption of the battery when the operation mode is converted in a local network communication mode or a satellite communication mode.

To achieve the above object, there is provided a method for converting automatically an operation mode of a multimode satellite terminal, the method including the steps of searching a satellite, at the multimode satellite terminal, when the power is turned on; recognizing a present location of the terminal; determining whether the recognized present location is located within the service area of the local network communication; and if the present location is located within the service area of the local network, operating in a local network communication mode.

The above object, features and advantages of the present invention will become more apparent from the following detailed description when taken in conjunction with the accompanying drawing in which:
FIG. 1 illustrates a communicable service area of a local network and a satellite communication of a multimode satellite terminal of a related art;

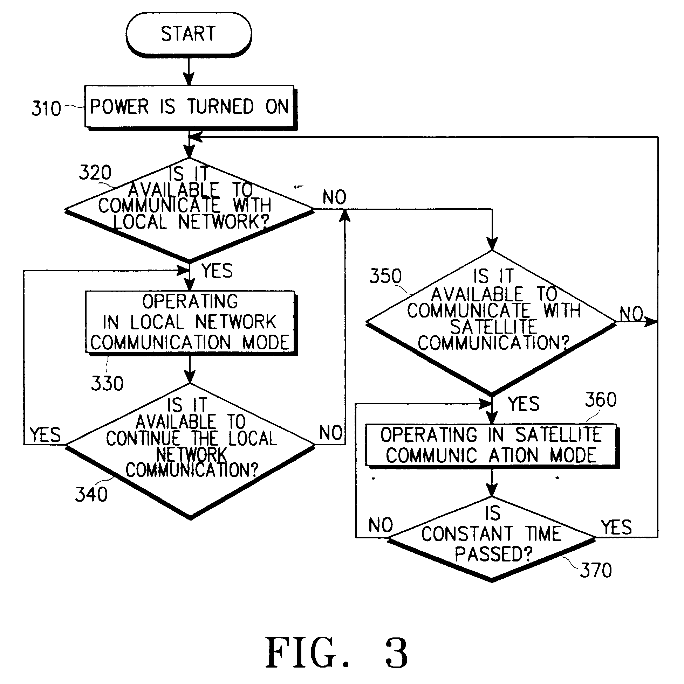

FIG. 2 is a schematic block diagram illustrating a structure of a multimode satellite terminal of a the related art;
FIG. 3 is a flow chart illustrating a method for converting an operation mode of a related multimode satellite terminal;

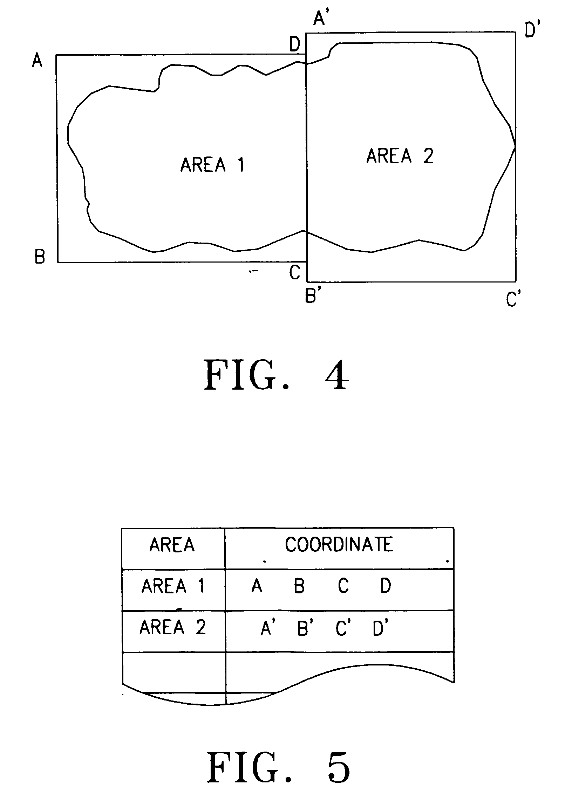

FIG. 4 illustrates a divided service area according to a preferred embodiment of the present invention;
FIG. 5 illustrates a service area information of a local network communication stored in a memory according to a preferred embodiment of the present invention; and

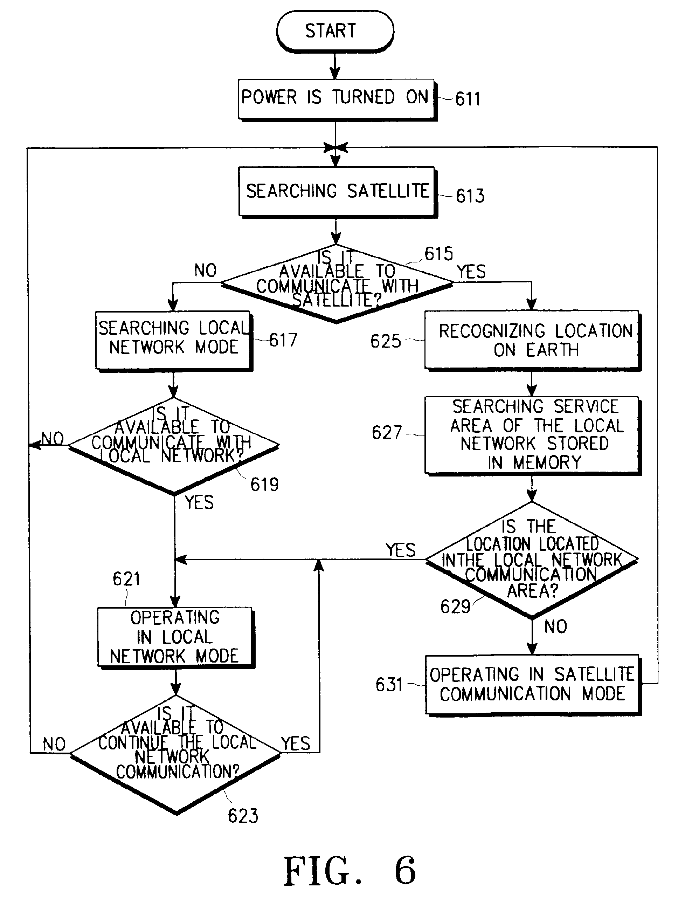

FIG. 6 is a flow chart illustrating a process for converting automatically an operation mode of a multimode satellite terminal according to a preferred embodiment of the present invention.

A preferred embodiment of the present invention will be described herein below with reference to the accompanying drawings. In the following description, well-known functions or constructions are not described in detail since they would obscure the invention in unnecessary detail.

FIG. 4 illustrates a divided service area according to a preferred embodiment of the present invention.

FIG. 5 illustrates a service area information of a local network stored in a memory according to a preferred embodiment of the present.

In reference to FIGs. 2, 4, and 5, an outlined operation of the multimode satellite terminal will be now described. The satellite control section 210 determines whether a present location of a multimode satellite terminal is located in a communicable area of a local network communication by searching a data for the service area received from a satellite with an information of the present location stored in the memory 230, so to control the local network communication control section 220 and the satellite communication RF section 240. The local network communication control section 220 operates in a local network communication mode by controlling a local network communication RF section 250 in the communicable area of the local network communication under the control of the satellite communication control section 210.

The memory 230 stores the information of the communicable area of the local network communication as shown in FIG 5. As shown in FIG 4, the information of the communicable area of the local network communication is obtained in a manner that the communicable area of the local network communication is divided into a plurality of squares having four vertexes, which changed into four coordinates. That is, a name for each area of the information of the communicable area is appointed by drawing a plurality of random squares including a real map as shown FIG.4, and the four coordinates of each communicable area is stored in the memory 230. For example, a range of an area 1 is located in coordinates A, B, C and D, and a range of an area 2 is included in coordinates A', B', C' and D' as shown in FIG. 4. As shown in FIG 5, the coordinates A, B, C and D are corded on a data structure of the area 1, and equally the coordinates A', B', C' and D are corded on a data structure of the area 2.

The satellite communication RF section 240 searches the satellite when the power of the terminal is turned on, calculates the location on the earth using the information received from the satellite, and transmits/receives signals for the satellite communication. The local network communication RF section 250 transmits/receives a RF signal for the local network communication, when the terminal is moved from the service area of the satellite communication under the control of the local network communication control section 220.

FIG. 6 is a flow chart illustrating the process for automatically converting an operation mode of the multimode satellite terminal according to the preferred embodiment of the present invention.

Referring to FIGs. 2, 4, and 6, it will be described the process for converting automatically the operation mode of the multimode satellite terminal in the local network communication mode or the satellite communication mode according to the preferred embodiment of the present invention. When the power of the terminal is turned on at step 611, the satellite communication control section 210, searches the satellite at step 613. At step 615, the satellite communication control section 210 determines whether the terminal is available to communicate with the satellite by searching the satellite through the satellite communication RF section 240. In the negative, the satellite communication control section 210 searches the local network mode by controlling the local network communication control section 220 at step 617. At that time, the local network communication control section 220 searches the local network mode through the local network communication RF section 250 under the control of the satellite communication control section 210. The local network communication control section 220 determines whether the local network communication is available through the local network communication RF section 250 at step 619. In the negative, the satellite communication control section 210 performs the operations again from the step 613 to the step 619. However, if the local network communication is determined to be available, the local network communication control section 220 operates in the local network mode by controlling the local network communication RF section 250. At step 623, the local network communication control section 220 determines whether the local network communication is continuously available through the local network communication RF section 250. In the affirmative, the local network communication control section 220 continuously operates in the local network mode. Meanwhile, in the negative, the satellite communication control section 210 performs the operations again from the step 613 to the step 623.

On the other hand, when determining the communication with the satellite is available, the satellite communication control section 210 recognizes a present location of the multimode satellite terminal by signals received from the satellite through the satellite communication RF section 240 at step 625. At step 627, the satellite communication control section 210 searches the service area of the local network communication stored in the memory 230. If the recognized present location of the multimode satellite terminal is located in the service area of the local network communication stored in the memory 230, the satellite communication controls section 210 controls the local network communication control section 220 to operate in the local network mode. Meanwhile, if the present location of the terminal is not located in the service area of the local network communication stored in the memory 230, the satellite communication control section 210 controls the satellite communication RF section 240 to operate in the satellite communication mode.

As described above, the process for converting automatically the operation mode of the multimode satellite terminal according to the present invention provides an advantage of prolonging an using time of the battery of a portable terminal, by turning on not the other part of a hardware turned-off at all times but a part of a hardware required only for the current service area. Further, it can convert automatically the operation mode in the real time, by comparing the recognized present location on the earth with the data of the service area stored in the memory, and converting the operation mode if the present location is located in the communicable area of the local network. Accordingly, the process according to the present invention provides the advantage of a curtailment of the service fee for the communication, since the satellite communication is converted immediately to the local network communication if the multimode satellite terminal is located in the communicable area of the local network.

While the invention has been shown and described with reference to a certain preferred embodiment thereof, it will be understood by those skilled in the art that various changes in form and details may be made therein without departing from the spirit and scope of the invention as defined by the appended claims.

## Claims

1. A method for automatically converting an operation mode of a multimode satellite terminal including a memory for storing data for a service area of a local network communication, and providing a satellite communication service and the local network communication service, the method comprising the steps of:
searching, at the multimode satellite terminal, a satellite when power is turned on;
recognizing a present location by a signal received from the satellite;
determining whether the recognized present location is located within the service area of the local network communication; and
operating in a local network communication mode when the present location is located within the service area of the local network communication.

2. The method of claim 1, further comprising the steps of:
determining whether the local network communication mode is searched by searching the local network communication mode when the satellite is not searched; and
operating in the local network communication mode when the local network communication mode is searched.

3. The method of claim 1 or 2, further comprising the step of operating in the satellite communication mode when the recognized present location is not located within the service area of the local network communication.

4. The method of one of claims 1 to 3, wherein the data for the service area of the local network communication is stored as four coordinates for each communicable area which is divided into a plurality of random squares and appointed as a name for the each area.

5. A method for automatically converting an operation mode of multimode satellite terminal including a memory for storing data for a service area of a local network communication, and providing a satellite communication service and the local network communication service, the method comprising the steps of:
searching a satellite, at the multimode satellite terminal, when power is turned on;
determining whether a communication with the satellite is available by searching the satellite;
determining whether the local network communication is available by searching a local network communication mode when the communication with the satellite is not available; and
operating in the local network communication mode if the local network communication is available.

6. The method of claim 5, further comprising the steps of:
recognizing a present location by a signal received from the satellite when the communication with the satellite is available;
determining whether the recognized present location is located in the service area of the local network communication; and
operating in the local network communication mode when the recognized present location is located in the service area of the local network communication.

7. The method of claim 6, further comprising the step of operating in the satellite mode when the recognized present location is not located in the service area of the local network communication stored in said memory.

8. The method of one of claims 5 to 7, wherein the data for a service area of the local network communication is stored as four coordinates for each communicable area which is divided as a plurality of random squares and appointed as a name for the each area.

9. The method of one of claims 5 to 8, further comprising the steps of:
determining whether the local network communication is continuously available while operating in the local network communication mode; and
searching a satellite again if the local network communication is not continuously available.

10. A multimode satellite terminal including a memory for storing data for a service area of a local network communication, capable of carrying out the method of any of claims 1 to 9.
